# FASCICULE DE BREVET EUROPEEN

(11) **EP 2 788 589 B1**
(45) Date de publication et mention de la délivrance du brevet: **14.10.2015**
(21) Numéro de dépôt: 12810333.0
(22) Date de dépôt: 04.12.2012
(51) Int. Cl.: F02C 7/20, F02C 7/28, F01D 11/12, F01D 25/24, F01D 25/28

(54) **DISPOSITIF DEVERROUILLABLE D'ARRET AXIAL D'UNE COURONNE D'ETANCHEITE CONTACTEE PAR UNE ROUE MOBILE DE MODULE DE TURBOMACHINE D'AERONEF**
ENTRIEGELBARE VORRICHTUNG ZUM AXIALEN FESTHALTEN EINES DICHTRINGS IN KONTAKT MIT DEM ROTORRAD EINES TURBOMASCHINENMODULS EINES FLUGZEUGES
RELEASABLE DEVICE FOR AXIALLY BLOCKING A SEALING RING WITH WHICH AN AIRCRAFT TURBOMACHINE MODULE ROTOR WHEEL MAKES CONTACT

(30) Priorité: 06.12.2011 FR 1161233
(43) Date de publication de la demande: 15.10.2014
(73) Titulaire: SNECMA, 75015 Paris (FR)
(72) Inventeur: BELMONTE, Olivier, F-77550 Moissy-cramayel Cedex (FR); PRESTEL, Sébastien, Jean, Laurent, F-77550 Moissy-cramayel Cedex (FR)
(74) Mandataire: Ahner, Philippe
(86) Numéro de dépôt international: PCT/FR2012/052788
(87) Numéro de publication internationale: WO 2013/083905

(56) Documents cités:
- EP-A1- 0 017 546
- EP-A1- 0 844 369
- EP-A1- 1 840 339
- EP-A2- 1 079 076
- EP-A2- 2 055 899
- US-A- 6 126 390

## Description

### DOMAINE TECHNIQUE

L'invention se rapporte à un dispositif d'arrêt axial d'une couronne d'étanchéité en matériau abradable contactée par la périphérie d'une roue mobile de module de turbomachine d'aéronef.

L'invention concerne plus particulièrement un dispositif d'arrêt axial pour la couronne d'étanchéité d'un premier étage de module de turbomachine, de préférence une turbine basse pression.

L'invention concerne tous les types de turbomachines d'aéronef, en particulier les turboréacteurs et les turbopropulseurs.

### ETAT DE LA TECHNIQUE ANTERIEURE

Dans un module de turbomachine d'aéronef, en particulier une turbine basse pression, les roues mobiles alternent avec des roues aubagées fixes, dites distributeurs. Une couronne d'étanchéité en matériau abradable est disposée autour de chaque roue mobile, qui contacte cette couronne avec des éléments périphériques dits « léchettes », afin de limiter les fuites au niveau de la veine principale de la turbomachine.

Sur les turbomachines existantes, certains éléments doivent pouvoir être démontés afin d'être contrôlés et/ou remplacés. C'est notamment le cas pour certaines couronnes d'étanchéité, en particulier celle associée à la première roue mobile de la turbine basse pression. Dans ce cas, la couronne segmentée doit être extraite secteur par secteur, de préférence sans qu'il soit nécessaire de retirer la roue mobile. L'extraction s'effectue alors entre le carter et la roue mobile, lorsque l'espace entre ces deux éléments le permet.

Dans les solutions conventionnelles de l'art antérieur, la couronne d'étanchéité de la première roue mobile de la turbine basse pression est associée à un dispositif d'arrêt axial du type anneau fendu de section en forme de C. Une languette annulaire de retenue de l'anneau ainsi qu'une languette annulaire de retenue du carter sont toutes les deux insérées dans le creux du C, qui est lui-même en appui axial contre une partie de la turbine haute pression adjacente.

Ainsi, pour extraire les secteurs angulaires de couronne, il faut retirer le module de turbine basse pression, puis désengager l'anneau fendu par translation vers l'avant. Les secteurs peuvent ensuite être glissés à travers l'espace restreint délimité entre la périphérie de la roue mobile et le carter.

Néanmoins, cette solution est perfectible en ce sens que l'espace restreint délimité entre la roue mobile et le carter s'avère parfois trop étroit pour envisager une extraction / insertion des secteurs angulaires de couronne d'étanchéité. Par ailleurs, outre les risques de perte de l'anneau fendu de blocage, il est noté que le démontage et le remontage de celui-ci impacte négativement la durée de maintenance liée à ces opérations.

Le document EP 1840339 A1 divulgue un dispositif d'arrêt axial d'une couronne d'étanchéité.

### -EXPOSÉ DE L'INVENTION

L'invention a donc pour but de remédier au moins partiellement aux inconvénients mentionnés ci-dessus, relatifs aux réalisations de l'art antérieur.

Pour ce faire, l'invention a pour objet un dispositif d'arrêt axial d'une couronne d'étanchéité en matériau abradable destinée à être contactée par la périphérie d'une roue mobile de module de turbomachine d'aéronef, ledit dispositif présentant un axe central de référence, dit premier axe.

Selon l'invention, le dispositif comprend :
- un support présentant une ouverture de support définissant une piste circulaire centrée sur un second axe parallèle audit premier axe et espacé de ce dernier ; et
- une pièce de butée axiale présentant un passage d'extraction centré sur un troisième axe parallèle audit second axe et espacé de ce dernier, la pièce de butée définissant à sa périphérie une piste circulaire complémentaire coopérant avec ladite piste circulaire du support de manière à permettre une rotation de ladite pièce de butée relativement à ce support selon ledit second axe, entre une position de butée axiale pour la couronne d'étanchéité, et une position d'extraction de cette couronne par ledit passage d'extraction, l'écartement entre les premier et troisième axes étant plus élevé dans ladite position d'extraction que dans ladite position de butée axiale.

La double excentricité du dispositif selon l'invention permet d'une part, dans la position de butée axiale, de centrer au mieux le passage d'extraction sur le premier axe qui correspond de préférence l'axe longitudinal de la turbomachine, ce centrage permettant à la pièce de butée axiale de se trouver en regard et en appui contre la couronne d'étanchéité, préférentiellement sur tout son pourtour. D'autre part, dans la position d'extraction, le passage d'extraction peut être largement excentré du premier axe, en cumulant par exemple au maximum les deux excentricités du dispositif. Cela permet de libérer l'appui axial d'au moins un secteur angulaire de couronne d'étanchéité, qui se retrouve alors en regard d'une partie du passage d'extraction par laquelle les secteurs peuvent être extraits puis réintroduits.

L'invention procure une solution simple, facile à mettre en oeuvre, et ne nécessitant pas l'extraction du dispositif d'arrêt axial en dehors du module de turbomachine concerné, ce dernier pouvant par conséquent présenter un caractère imperdable.

De préférence, l'espacement entre lesdits premier et second axes est identique à l'espacement entre lesdits second et troisième axes. Il pourrait bien entendu en être autrement, sans sortir du cadre de l'invention.

De préférence, ledit passage d'extraction est de forme générale circulaire, centrée sur ledit troisième axe. A cet égard, le passage peut présenter une répétition de motifs espacés régulièrement selon sa direction circonférentielle, les motifs servant alors de butées pour l'anneau d'étanchéité.

De préférence, ladite ouverture de support présente un rebord de support axial de ladite pièce de butée axiale, ledit rebord longeant ladite piste circulaire et se projetant radialement vers l'intérieur à partir de celle-ci, et présentant de préférence une encoche pour l'extraction de ladite couronne d'étanchéité.

De préférence, ledit support présente une périphérie festonnée centrée sur ledit premier axe, dédiée à la fixation du support sur un carter du module de turbomachine. Cette périphérie festonnée peut simultanément être traversée par les moyens de fixation du carter sur le carter du module adjacent, ou même inclure directement ces moyens de fixation.

L'invention a également pour objet un module de turbomachine d'aéronef comprenant un carter, une roue mobile, une couronne d'étanchéité en matériau abradable contactée par la périphérie de la roue mobile, ainsi qu'un dispositif d'arrêt axial tel que décrit ci-dessus, coopérant avec ladite couronne d'étanchéité.

De préférence, ledit premier axe du dispositif d'arrêt axial est confondu avec un axe longitudinal du module de turbomachine.

De préférence, dans ladite position de butée axiale, ladite couronne d'étanchéité est en appui axial sur 360° contre ladite pièce de butée axiale, et dans ladite position d'extraction de la couronne, au moins un secteur angulaire de celle-ci est dépourvu de contact axial avec ladite pièce de butée axiale, ce secteur angulaire présentant une extrémité radiale intérieure en regard axialement dudit passage d'extraction.

De préférence, ladite pièce de butée axiale est enserrée axialement entre une bride du carter et ledit rebord de support axial.

Enfin, l'invention a pour objet une turbomachine d'aéronef comprenant au moins un module tel que décrit ci-dessus, ladite turbomachine comprenant de préférence des moyens de fixation dudit module sur un autre module adjacent, lesdits moyens de fixation permettant également la fixation du support sur le carter du module.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue en perspective d'une partie de turbine basse pression de turbomachine d'aéronef, selon un mode de réalisation préféré de la présente invention ;
- la figure 2 représente une vue en coupe d'un dispositif d'arrêt axial d'une couronne d'étanchéité de la turbine montrée sur la figure précédente, le dispositif d'arrêt axial se présentant dans une position d'extraction de la couronne, cette figure 2 correspondant également à la vue en coupe prise le long de ligne II-II de la figure 2A ;
- les figures 2A, 2B et 2C sont des vues en coupe prises respectivement le long des lignes A-A, B-B et C-C de la figure 2 ;
- la figure 3 est une vue similaire à celle de la figure 2, avec le dispositif d'arrêt axial se trouvant une position de butée axiale ;
- la figure 4 représente une autre vue partielle en perspective de la turbine basse pression montrée sur la figure 1, avec certains éléments épurés pour des raisons de clarté ;
- la figure 5 représente une vue de face de celle montrée sur la figure 4 ;
- la figure 6 représente une vue similaire à celle de la figure 1, avec le dispositif d'arrêt axial en position d'extraction de la couronne d'étanchéité ;
- la figure 7 représente une vue similaire à celle de la figure 4, avec le dispositif d'arrêt axial en position d'extraction de la couronne d'étanchéité ; et
- la figure 8 représente une vue similaire à celle de la figure 5, avec le dispositif d'arrêt axial en position d'extraction de la couronne d'étanchéité.

### EXPOSÉ DÉTAILLÉ DE MODES DE RÉALISATION PRÉFÉRÉS

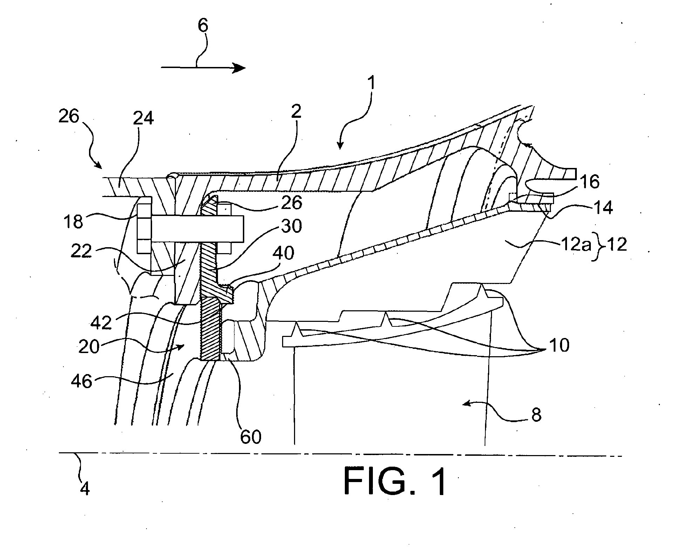

En référence à la figure 1, il est représenté une turbine basse pression de turbomachine d'aéronef, de préférence un turboréacteur. La turbine 1 comprend un carter extérieur 2, de forme révolutionnaire centrée sur l'axe longitudinal 4 de la turbine. La turbine est équipée, en alternance selon la direction axiale, de roues mobiles et de distributeurs fixes. Sur la figure 1, seule la première roue, la plus amont, a été représentée.

A cet égard, il est noté que dans toute la description, les termes « amont » et « aval » sont donnés en référence à la direction principale de circulation des gaz à travers la turbine, cette direction étant représentée par la flèche 6.

La roue mobile 8, pourvue d'une pluralité d'aubes, est centrée sur l'axe 4. A sa périphérie, elle présente des léchettes 10 prévues pour contacter une couronne d'étanchéité 12 réalisée en matériau abradable, d'une manière connue de l'homme du métier. La couronne est également dénommée « anneau abradable ».

Elle est réalisée à partir d'une pluralité de secteurs angulaires de couronne 12a agencés dans la continuité les uns des autres, selon la direction circonférentielle. Elle est en appui radial extérieur contre un alésage 14 du carter 2, ainsi qu'en butée axiale vers l'aval par le biais d'une languette 16 pratiquée à la périphérie de la couronne, et en appui contre cette même partie du carter.

A l'amont, il est prévu un dispositif 20 d'arrêt axial de la couronne, spécifique à la présente invention. Ce dispositif permet d'arrêter axialement vers l'amont la couronne d'étanchéité 12. Ce dispositif est fixé de manière amovible, par exemple par boulons 18, sur une bride 22 du carter 2, qui fait ici saillie radialement vers l'intérieur. Pour ce faire, le dispositif présente une périphérie festonnée 26 centrée sur l'axe 4, chaque saillie étant traversée par un boulon 18.

Dans le mode de réalisation préféré représenté, ces mêmes boulons 18 assurent la fixation de la bride 22 avec une bride 24 du carter de la turbine basse pression adjacente.

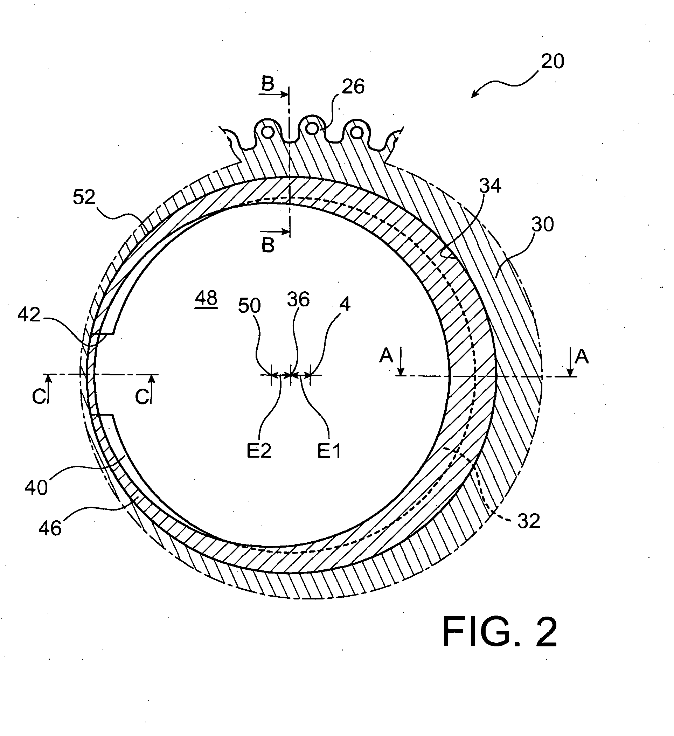

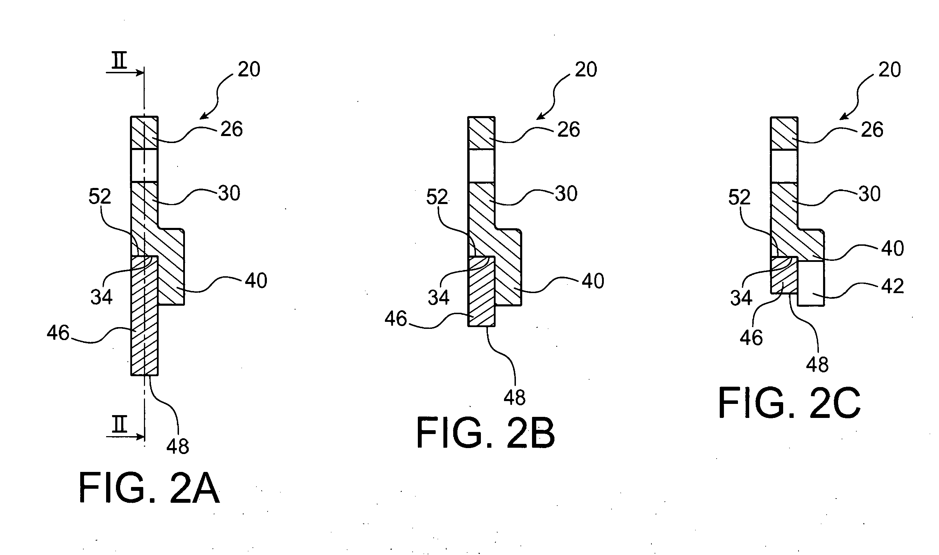

Le dispositif 20 va à présent être détaillé, en référence aux figures 2 à 3.

Tout d'abord, le dispositif 20 présenté un support 30 équipé de ladite périphérie festonnée 26, centrée sur l'axe central de référence du dispositif, correspondant à l'axe 4 lorsque le dispositif 20 est monté sur la turbine 1. Par conséquent, cet axe sera référencé 4, et dit premier axe.

Le support 30 présente une ouverture de support 32 définissant une piste circulaire 34 centrée sur un second axe 36 parallèle au premier axe, et espacé de ce dernier d'une valeur « E1 ».

De plus, l'ouverture de support 32 présente un rebord 40 longeant la piste circulaire 34 et se projetant radialement vers l'intérieur à partir de celle-ci. Le rebord 40 présente quant à lui une encoche 42 pour l'extraction de la couronne d'étanchéité, comme cela sera décrit ci-après.

Le rebord 40 a pour fonction de supporter axialement un autre élément du dispositif 20, à savoir une pièce de butée axiale pour la couronne, référencée 46.

La pièce de butée axiale 46 présente un passage d'extraction 48 centré sur un troisième axe 50 parallèle au second axe 36, et espacé de ce dernier d'une valeur « E2 » préférentiellement identique à E1.

De plus, la pièce 46 définit à sa périphérie une piste circulaire complémentaire 52 coopérant avec la piste circulaire 34 du support 30, en étant donc également centrée sur l'axe 36. Les deux pistes 34, 52 présentent donc des diamètres sensiblement identiques.

La double excentricité prévue au sein du dispositif 20 permet d'adopter deux positions distinctes par simple rotation de la pièce de butée 46 autour de son axe 36, relativement au support 30. Ces deux positions permettent respectivement le déverrouillage et le verrouillage du dispositif d'arrêt axial 20.

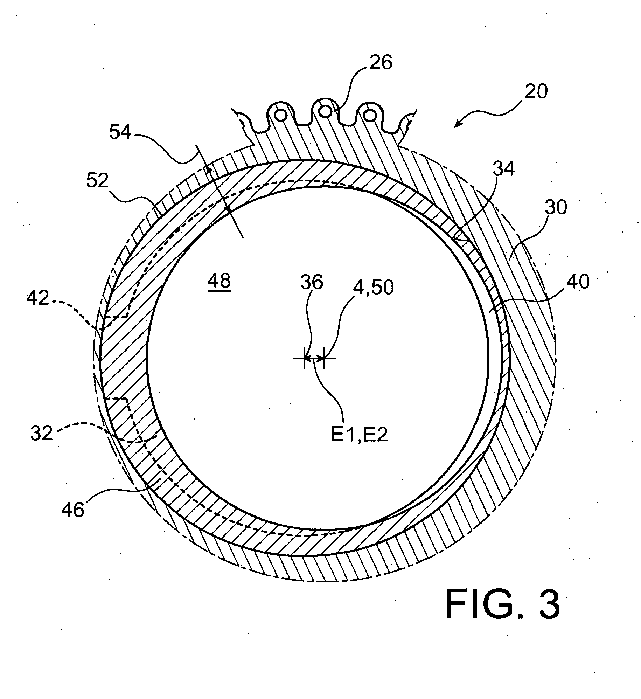

Il s'agit d'une position d'extraction de la couronne par le passage d'extraction 48, telle que représentée sur la figure 2, et d'une position de butée axiale pour la couronne d'étanchéité, telle que représentée sur la figure 3.

Dans la position d'extraction, le passage 48 est excentré au maximum de l'axe 4. La valeur de l'excentricité correspondant à la somme des valeurs E1 et E2. Par conséquent, l'épaisseur du dispositif 20 dans la direction radiale est très variable le long de la direction circonférentielle. En effet, du côté diamétralement opposé à l'encoche 42, le support présente l'épaisseur radiale la plus élevée, de même que la pièce 46 dispose également de l'épaisseur radiale la plus élevée. La somme des deux épaisseurs radiales est par conséquent très importante, comme cela est visible sur la figure 2A.

En revanche, du côté de l'encoche 42, le support 30 présente l'épaisseur radiale la plus faible, de même que la pièce 46 dispose également de l'épaisseur radiale la plus faible. La somme des deux épaisseurs radiales, représentée sur la figure 2C, est par conséquent minimale, et largement inférieure à celle de la figure 2A. A titre indicatif, la figure 2B représente l'épaisseur radiale moyenne du dispositif telle que rencontrée entre les deux portions extrêmes mentionnées ci-dessus.

Comme cela sera décrit ci-après, le décalage radial du passage d'extraction 48 permet d'envisager l'extraction des secteurs angulaires de couronne 12a par ce même passage, au niveau de sa partie excentrée superposée avec l'encoche 42 du rebord de support.

Dans la position de butée radiale montrée sur la figure 3, le passage 48 est centré sur l'axe 4, par compensation des excentricités E1, E2. Les axes 4 et 50 sont par conséquent confondus, impliquant un écartement nul entre ces derniers.

Ainsi, l'épaisseur 54 du dispositif 20 dans la direction radiale reste sensiblement identique tout le long de la direction circonférentielle. En effet, du côté diamétralement opposé à l'encoche 42, le support présente l'épaisseur radiale la plus élevée, tandis que la pièce 46 dispose de l'épaisseur radiale la plus faible. La somme des deux épaisseurs radiales est sensiblement identique à celle du côté de l'encoche 42, le support 30 présentant l'épaisseur radiale la plus faible, tandis que la pièce 46 dispose de l'épaisseur radiale la plus élevée.

Comme cela sera décrit ci-après, le centrage du passage d'extraction 48 permet à la pièce 46 de constituer une butée axiale pour la couronne, tout le long de celle-ci.

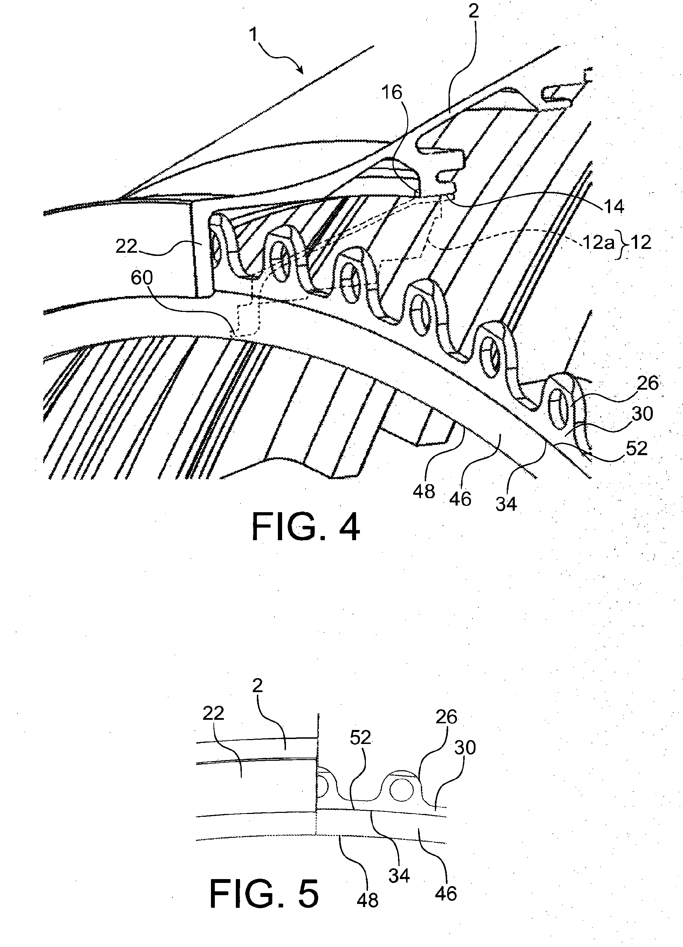

En effet, en référence aux figures 1, 4 et 5, on peut apercevoir le dispositif 20 installé sur la bride 22 du carter 2, en position de butée axiale dans laquelle la couronne d'étanchéité 12 est en appui axial sur 360° contre la pièce de butée axiale 46, au niveau d'une extrémité radialement interne de celle-ci. Pour ce faire, à l'amont, la couronne 12 présente une patte d'appui 60 en saillie axialement vers l'amont, et au contact de ladite extrémité radialement interne de la pièce 46, comme cela est visible sur la figure 1, ainsi que sur la figure 4 sur laquelle la couronne 12 a uniquement été représentée de manière schématique.

Il s'agit ici d'une position verrouillée, également dite activé, dans laquelle le dispositif 20 permet de retenir la couronne 12 en translation. Dans cette position, la périphérie festonnée 26 du support 30 est fixée fermement contre la bride 22 du carter 2, du côté aval, tandis que la pièce 46 se retrouve enserrée axialement entre cette même bride 22 et le rebord 40 du support 30. Ce serrage interdit le déplacement de la pièce de butée 46 durant le fonctionnement de la turbine, et interdit en particulier sa rotation sur la piste 34.

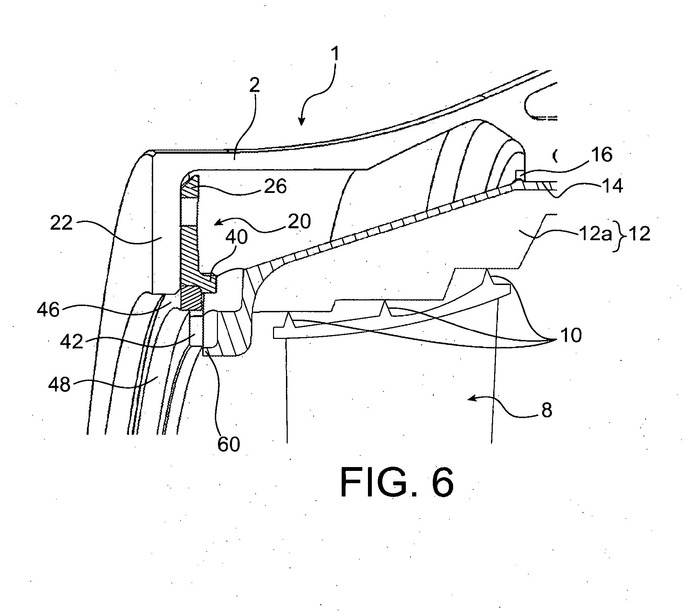

En référence à présent aux figures 6 à 8, on peut apercevoir le dispositif 20 en position d'extraction dans laquelle la turbine basse pression a été démontée, et dans laquelle ce dispositif d'arrêt axial 20 a été désolidarisé de la bride 22 par retrait ou desserrage des écrous 18. Néanmoins, le support 30 et la pièce 46 restent retenus vers l'amont par la bride de carter 22 qui s'étend suffisamment dans la direction radiale vers l'intérieur, impliquant que le dispositif 20 ne peut pas s'échapper de la turbine. Il présente par conséquent un caractère imperdable.

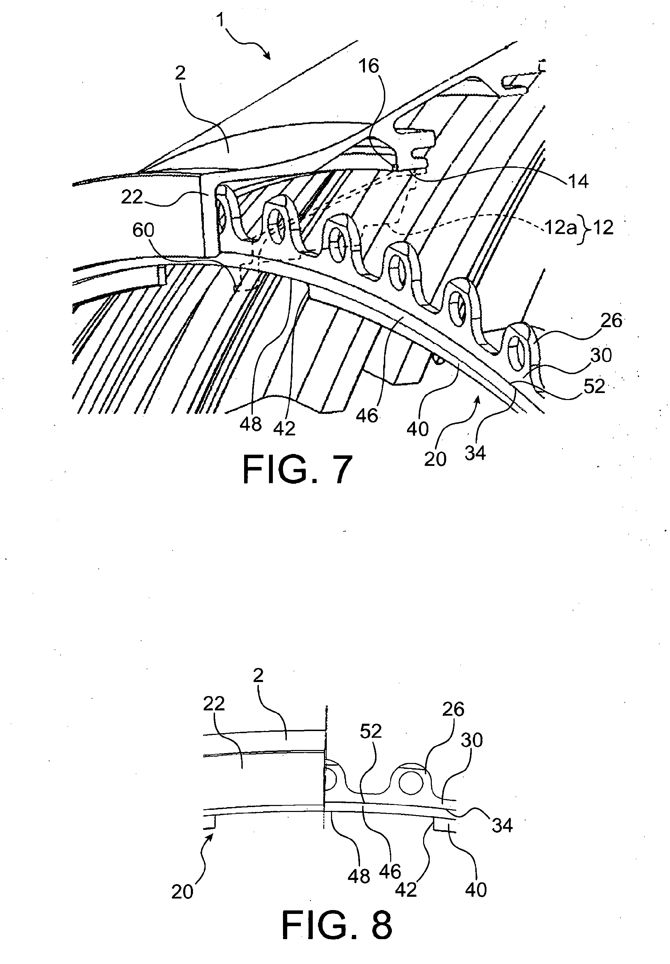

La pièce 46, qui n'est donc plus enserrée entre la bride 22 et le rebord 40, a donc été facilement amenée de sa position de butée à sa position d'extraction, par simple rotation autour de son axe 36. Comme évoqué précédemment, dans cette dernière position, le passage d'extraction 48 est excentré et permet notamment de libérer une partie de l'encoche 42 du rebord 40. Au niveau de cette encoche, la patte d'appui 60 de la couronne 12 n'est plus au contact de la pièce 46, comme cela est le mieux visible sur la figure 6, ainsi que sur la figure 7 sur laquelle la couronne 12 a uniquement été représentée de manière schématique. Ainsi, la couronne 12 n'est plus en appui axial sur tout son pourtour contre la pièce de butée 46. En d'autres termes, au moins un secteur angulaire de la couronne 12, situé proche de l'encoche 42, est dépourvu de contact axial avec la pièce de butée 46, ce secteur angulaire présentant en effet une extrémité radiale intérieure en regard axialement du passage d'extraction 48 et de cette même encoche 42.

Par conséquent, il est possible d'extraire ces secteurs de couronne un à un tout en conservant la roue mobile 8 en place, en faisant glisser chaque secteur vers l'avant à travers l'encoche 42 et la partie excentrée du passage 48.

Naturellement, les opérations décrites ci-dessus sont effectuées dans l'ordre inverse lorsqu'il s'agit de remonter la couronne 12 dans l'espace entre le carter 2 et la roue 8.

## Revendications

1. Dispositif (20) d'arrêt axial d'une couronne d'étanchéité (12) en matériau abradable destinée à être contactée par la périphérie d'une roue mobile (8) de module de turbomachine d'aéronef, ledit dispositif présentant un axe central de référence (4), dit premier axe,
**caractérisé en ce qu'**il comprend :
- un support (30) présentant une ouverture de support (32) définissant une piste circulaire (34) centrée sur un second axe (36) parallèle audit premier axe (4) et espacé de ce dernier ; et
- une pièce de butée axiale (46) présentant un passage d'extraction (48) centré sur un troisième axe (50) parallèle audit second axe (36) et espacé de ce dernier, la pièce de butée définissant à sa périphérie une piste circulaire complémentaire (52) coopérant avec ladite piste circulaire (34) du support (30) de manière à permettre une rotation de ladite pièce de butée relativement à ce support selon ledit second axe (36), entre une position de butée axiale pour la couronne d'étanchéité (12), et une position d'extraction de cette couronne par ledit passage d'extraction (48), l'écartement entre les premier et troisième axes (4, 50) étant plus élevé dans ladite position d'extraction que dans ladite position de butée axiale.

2. Dispositif d'arrêt axial selon la revendication 1, **caractérisé en ce que** l'espacement entre lesdits premier et second axes (4, 36) est identique à l'espacement entre lesdits second et troisième axes (36, 50).

3. Dispositif d'arrêt axial selon la revendication 1 ou la revendication 2, **caractérisé en ce que** ledit passage d'extraction (48) est de forme générale circulaire, centrée sur ledit troisième axe (50).

4. Dispositif d'arrêt axial selon l'une quelconque des revendications précédentes, **caractérisé en ce que** ladite ouverture de support (32) présente un rebord (40) de support axial de ladite pièce de butée axiale (46), ledit rebord longeant ladite piste circulaire (34) et se projetant radialement vers l'intérieur à partir de celle-ci, et présentant de préférence une encoche (42) pour l'extraction de ladite couronne d'étanchéité (12).

5. Dispositif d'arrêt axial selon l'une quelconque des revendications précédentes, **caractérisé en ce que** ledit support (30) présente une périphérie festonnée (26) centrée sur ledit premier axe (4), dédiée à la fixation du support sur un carter (2) du module de turbomachine.

6. Module (1) de turbomachine d'aéronef comprenant un carter (2), une roue mobile (8), une couronne d'étanchéité (12) en matériau abradable contactée par la périphérie de la roue mobile (8), ainsi qu'un dispositif d'arrêt axial (20) selon l'une quelconque des revendications précédentes, coopérant avec ladite couronne d'étanchéité (12).

7. Module de turbomachine selon la revendication 6, **caractérisé en ce que** ledit premier axe (4) du dispositif d'arrêt axial (20) est confondu avec un axe longitudinal du module de turbomachine.

8. Module de turbomachine selon la revendication 6 ou la revendication 7, **caractérisé en ce que** dans ladite position de butée axiale, ladite couronne d'étanchéité (12) est en appui axial sur 360° contre ladite pièce de butée axiale (46), et **en ce que** dans ladite position d'extraction de la couronne, au moins un secteur angulaire de celle-ci est dépourvu de contact axial avec ladite pièce de butée axiale, ce secteur angulaire présentant une extrémité radiale intérieure en regard axialement dudit passage d'extraction (48).

9. Module de turbomachine selon l'une quelconque des revendications 6 à 8, **caractérisé en ce que** ladite pièce de butée axiale (46) du dispositif selon la revendication 4 est enserrée axialement entre une bride (22) du carter (2) et ledit rebord de support axial (40).

10. Turbomachine d'aéronef comprenant au moins un module (1) selon l'une quelconque des revendications 6 à 9, ladite turbomachine comprenant de préférence des moyens de fixation (18) dudit module (1) sur un autre module adjacent (26), lesdits moyens de fixation (18) permettant également la fixation du support (30) sur le carter (2) du module (1).

## Patentansprüche

1. Vorrichtung (20) zum axialen Festhalten eines Dichtrings (12) aus Abriebmaterial, der dazu vorgesehen ist, in Kontakt mit dem Außenumfang eines Rotorrades (8) eines Turbomaschinenmoduls eines Flugzeugs zu sein, wobei diese Vorrichtung eine Bezugs-Mittelachse (4), erste Achse genannt, aufweist,
**dadurch gekennzeichnet,**
**dass** sie umfasst:
eine Halterung (30) mit einer Halteöffnung (32), die eine kreisförmige Bahn (34) bildet, die auf einer zweiten Achse (36) zentriert ist, welche parallel zu der genannten ersten Achse (4) und in Abstand von letzterer verläuft, und
ein Axialanschlagsstück (46) mit einem Entnahmedurchlass (48), der auf einer dritten Achse (50) zentriert ist, welche parallel zu der genannten zweiten Achse (36) und in Abstand von letzterer verläuft, wobei das Anschlagsstück an seinem Außenumfang eine komplementäre kreisförmige Bahn (52) bildet, die mit der kreisförmigen Bahn (34) der Halterung (30) dergestalt zusammenwirkt, dass dadurch eine Rotationsbewegung des genannten Anschlagsstücks gegenüber dieser Halterung um die zweite Achse (36) zwischen einer axialen Anschlagsstellung für den Dichtring (12) und einer Entnahmestellung dieses Dichtrings durch den genannten Entnahmedurchlass (48), möglich wird, wobei der Abstand zwischen der ersten und der dritten Achse (4 und 50) bei dieser Entnahmestellung größer ist als bei der genannten axialen Anschlagsstellung.

2. Vorrichtung zum axialen Festhalten nach Anspruch 1,
**dadurch gekennzeichnet,**
**dass** der Abstand zwischen der genannten ersten und zweiten Achse (4 und 36) gleich groß ist wie der Abstand zwischen der genannten zweiten und dritten Achse (36 und 50).

3. Vorrichtung zum axialen Festhalten nach Anspruch 1 oder Anspruch 2,
**dadurch gekennzeichnet,**
**dass** der genannte Entnahmedurchlass (48) allgemein kreisförmig ausgeführt ist und auf der dritten Achse (50) zentriert ist.

4. Vorrichtung zum axialen Festhalten nach einem der vorherigen Ansprüche,
**dadurch gekennzeichnet,**
**dass** die genannte Halteöffnung (32) einen Anschlagrand (40) zum axialen Halten des genannten Axialanschlagsstücks (46) aufweist, wobei dieser Anschlagrand entlang der genannten kreisförmigen Bahn (34) verläuft und von dieser aus radial nach innen ragt sowie vorzugsweise eine Aussparung (42) für die Entnahme des Dichtrings (12) aufweist.

5. Vorrichtung zum axialen Festhalten nach einem der vorherigen Ansprüche,
**dadurch gekennzeichnet,**
**dass** diese Halterung (30) eine gebogene Außenumfangslinie (26) aufweist, die auf der ersten Achse (4) zentriert ist, und die auf die Befestigung der Halterung an einem Gehäuse (2) des Turbomaschinenmoduls zugeschnitten ist.

6. Modul (1) einer Turbomaschine für Flugzeuge mit einem Gehäuse (2), einem Rotorrad (8), einem Dichtring (12) aus Abriebmaterial, mit dem der Außenumfang des Rotorrades (8) in Kontakt kommt, sowie einer Vorrichtung zum axialen Festhalten (20) nach einem der vorherigen Ansprüche, die mit diesem Dichtring (12) zusammenwirkt.

7. Turbomaschinenmodul nach Anspruch 6,
**dadurch gekennzeichnet,**
**dass** die genannte erste Achse (4) der Vorrichtung zum axialen Festhalten (20) mit einer Längsachse des Turbomaschinenmoduls zusammenfällt.

8. Turbomaschinenmodul nach Anspruch 6 oder Anspruch 7,
**dadurch gekennzeichnet,**
**dass** sich der Dichtring (12) in der genannten axialen Anschlagsstellung über 360 ° in axialer Anlage an dem genannten axialen Anschlagsstück (46) befindet, und dass in der genannten Entnahmestellung des Dichtrings zumindest ein Winkelsektor dessen ohne axialen Kontakt mit diesem axialen Anschlagsstück ist, indem dieser Winkelsektor sich mit einem inneren radialen Ende axial gegenüber dem genannten Entnahmedurchlass (48) befindet.

9. Turbomaschinenmodul. nach einem der Ansprüche 6 bis 8,
**dadurch gekennzeichnet,**
**dass** das genannte axiale Anschlagsstück (46) der Vorrichtung nach Anspruch 4 axial zwischen einem Flansch (22) des Gehäuses (2) und dem genannten Anschlagrand zum axialen Halten (40) festgeklemmt ist.

10. Turbomaschine für Flugzeuge, die mindestens ein Modul (1) nach einem der Ansprüche 6 bis 9 enthält, wobei diese Turbomaschine vorzugsweise Befestigungsmittel (18) für dieses Modul (1) an einem anderen, angrenzenden Modul (26) aufweist, wobei diese Befestigungsmittel (18) auch die Befestigung der Halterung (30) an dem Gehäuse (2) des Moduls (1) ermöglichen.

## Claims

1. Device (20) for axially arresting a sealing ring (12) made of an abradable material that will come into contact with the periphery of a rotor (8) of an aircraft turbomachine module, said device having a reference central axis (4), called the first axis,
**characterised in that** it comprises:
- a support (30) with a support opening (32) defining a circular track (34) centred on a second axis (36) parallel to said first axis (4) and at a distance from it; and
- an axial stop part (46) having an extraction passage (48) centred on a third axis (50) parallel to said second axis (36) and at a distance from it, the stop part defining a complementary circular track (52) around its periphery cooperating with said circular track (34) of the support (30) to allow said stop part to rotate relative to this support along said second axis (36), between an axial stop position for the sealing ring (12), and a position for extraction of this ring through said extraction passage (48), the distance between the first and third axes (4, 50) being larger in said extraction position than in said axial stop position.

2. Axially arresting device according to claim 1, **characterised in that** the distance between said first and second axes (4, 36) is the same as the distance between said second and third axes (36, 50).

3. Axially arresting device according to claim 1 or claim 2, **characterised in that** said extraction passage (48) is generally circular in shape, centred on said third axis (50).

4. Axially arresting device according to any one of the previous claims, **characterised in that** said support opening (32) has an axial support rim (40) for said axial stop part (46), said rim running along said circular track (34) and projecting radially inwards from it, and preferably having a notch (42) for extraction of said sealing ring (12).

5. Axially arresting device according to any one of the previous claims, **characterised in that** said support (30) has a festooned periphery (26) centred on said first axis (4), dedicated to attachment of the support onto a casing (2) of the turbomachine module.

6. Aircraft turbomachine module (1) comprising a casing (2), a rotor (8), a sealing ring (12) made of an abradable material in contact with the periphery of the rotor (8), and an axial arresting device (20) according to any one of the previous claims, cooperating with said sealing ring (12).

7. Turbomachine module according to claim 6, **characterised in that** said first axis (4) of the axial arresting device (20) is coincident with a longitudinal axis of the turbomachine module.

8. Turbomachine module according to claim 6 or claim 7, **characterised in that** when in said axial stop position, said sealing ring (12) is in axial bearing around 360° with said axial stop part (46), and when in said ring extraction position, at least one angular sector of the ring does not have any axial contact with said axial stop part, this angular sector having a radial inner end that is axially facing said extraction passage (48).

9. Turbomachine module according to any one of claims 6 to 8, **characterised in that** said axial stop part (46) of the device according to claim 4 is axially squeezed between a flange (22) of the casing (2) and said axial support rim (40).

10. Aircraft turbomachine comprising at least one module (1) according to any one of claims 6 to 9, said turbomachine preferably comprising means of attachment (18) of said module (1) onto another adjacent module (26), said attachment means (18) also being used for attachment of the support (30) onto the casing (2) of the module (1).
